# FASCICULE DE BREVET EUROPEEN

(11) **EP 2 235 483 B1**
(45) Date de publication et mention de la délivrance du brevet: **05.02.2020**
(21) Numéro de dépôt: 08761750.2
(22) Date de dépôt: 10.01.2008
(51) Int. Cl.: G01F 1/66

(54) **DISPOSITIF DE MESURE DU DÉBIT D'UN FLUIDE CIRCULANT DANS UNE CANALISATION, PROCÉDÉ DE MESURE DE DÉBIT, ET CANALISATION**
VORRICHTUNG ZUR DURCHFLUSSMESSUNG EINES IN EINER ROHRLEITUNG FLIESSENDEN MEDIUMS, VERFAHREN ZUR DURCHFLUSSMESSUNG, UND ROHRLEITUNG
DEVICE FOR MEASURING THE FLOW RATE OF A FLUID FLOWING IN A PIPELINE, METHOD OF MEASURING A FLOW RATE, AND PIPELINE

(43) Date de publication de la demande: 06.10.2010
(73) Titulaire: Metering & Technology Limited, London W1F 7LD (GB)
(72) Inventeur: LAURENT, Denis, F-72500 Montabon (FR)
(74) Mandataire: Cabinet Netter
(86) Numéro de dépôt international: PCT/FR2008/000028
(87) Numéro de publication internationale: WO 2009/087280

(56) Documents cités:
- EP-A1- 2 072 972
- WO-A1-2009/074162
- US-A- 4 162 630
- US-A- 4 462 261
- US-A- 5 719 329
- US-A- 6 067 861

## Description

La présente invention concerne un dispositif de mesure du débit d'un fluide circulant dans une canalisation.

Il existe de nombreux moyens pour mesurer un débit de fluide traversant une canalisation, notamment d'hydrocarbures. Parmi les techniques connues, on peut citer l'utilisation d'un dispositif à ultrason comme celui décrit dans le brevet US-A-4 462 261.

US 5719329 divulgue un système de mesure ultrasonique comprenant une pluralité de transducteurs ultrasoniques amont et aval couplés à un pipeline et positionnés selon deux portions de sections transversales. Le système peut être utilisé pour mesurer un débit.

US 4462261 divulgue un dispositif pour mesurer la masse et la vélocité d'un fluide circulant dans une canalisation. Il comprend une paire de matrices de transducteurs chacune disposée selon des plans s'étendant au travers de la canalisation.

US 4162630 discute de la reconstruction tridimensionnelle du champ vectoriel de vitesse d'un fluide à partir d'un jeu de mesures de temps de propagation acoustique entre une multiplicité de transducteurs disposés sur une surface limite stationnaire.

US 6067861 divulgue un procédé et un dispositif de mesure tomographique de la vitesse du son et de la vélocité d'un fluide dans une canalisation.

EP 2072972 divulgue un système de mesure de débit d'un fluide dans une canalisation. Ce système calcule des différences de temps de vol ultrasoniques dans une direction et une autre.

WO 2009/074162 divulgue un dispositif pour mesurer le débit d'un fluide dans une canalisation. Il comprend un tube formant une partie de la canalisation et présentant des coins d'hexagones. Les transducteurs sont fixés sur les deux surfaces de chaque coin d'hexagone.

Cependant, les techniques de mesure actuelles ne sont pas assez fiables, notamment lorsqu'il s'agit de réaliser une mesure de débit (et donc de quantité) de produit dans le cadre d'une transaction, par exemple en sortie de pipeline, d'une raffinerie ou d'un pétrolier.

Un but de la présente invention est donc de résoudre le problème cité précédemment à l'aide d'une solution fiable, peu encombrante et de conception simple.

Ainsi, la présente invention a pour objet un dispositif de mesure du débit d'un fluide circulant dans une canalisation, notamment pour une transaction entre un fournisseur et un acheteur d'hydrocarbure, comportant :
- un corps cylindrique destiné à être interposé entre deux sections de ladite canalisation,
- des transducteurs à faisceau d'ultrason montés sur le corps principal et destinés à mesurer au moins une vitesse de déplacement du flux de fluide lorsque ce dernier traverse ledit dispositif, et
- au moins un convertisseur destiné à transformer les signaux émis par les transducteurs en un signal de débit.

Les transducteurs sont montés et répartis de manière régulière sur deux couronnes parallèles coaxiales, les transducteurs d'une première couronne étant décalés angulairement par rapport aux transducteurs de la seconde couronne de sorte qu'aucun transducteur d'une première couronne ne se trouve aligné avec un autre transducteur de la seconde couronne sur une droite parallèle à l'axe commun aux deux couronnes. Chaque couronne comporte n transducteurs, n étant un nombre entier supérieur ou égal à 2, et le décalage angulaire entre les transducteurs des deux couronnes est égal à 360°/ (2 n).

Selon des modes de réalisation préférés, le dispositif selon la présente invention peut comprendre en outre l'une au moins des caractéristiques suivantes :
- n étant égal à huit, chaque transducteur d'une couronne comporte quatre émetteurs/récepteurs, chaque émetteur/récepteur étant en relation, par l'intermédiaire d'un faisceau à ultrason, avec un émetteur/récepteur de quatre transducteurs de l'autre couronne, et réciproquement ;
- chaque transducteur de la première couronne est en liaison avec quatre transducteurs de la seconde couronne qui sont décalés angulairement de (180° ± 180°/n) et (180° ± 540°/n) par rapport audit transducteur considéré de la première couronne, et réciproquement ;
- les couronnes sont espacées de 5 à 300 centimètres ;

L'invention se rapporte également à un procédé pour mesurer le débit d'un fluide circulant dans une canalisation, notamment pour une transaction entre un fournisseur et un acheteur d'hydrocarbure, mettant en œuvre le dispositif tel que décrit précédemment.

Avantageusement, les faisceaux d'ultrason de certains transducteurs se coupant en différents nœuds, la mesure du débit est réalisée à la fois linéairement, lorsque chaque faisceau est coupé individuellement par le fluide, et en utilisant l'effet Doppler au niveau de chacun desdits nœuds.

L'invention a également pour objet une canalisation de transport de fluide, en particulier d'hydrocarbure, caractérisée en ce que qu'elle est équipée d'un dispositif tel que décrit précédemment.

L'invention va maintenant être décrite plus en détail en référence à des modes de réalisation particuliers donnés à titre d'illustration uniquement et représentés sur les figures annexées dans lesquelles :
- la figure 1 est une vue en perspective éclatée d'un dispositif de mesure de débit de fluide conforme à la présente invention ;
- la figure 2 est une vue coupe longitudinale en perspective de la figure 1
- la figure 3 est une vue de face du dispositif de la figure 1 représentant des faisceaux d'ultrason émis par des transducteurs ;
- la figure 4 est une vue en perspective de la figure 3 ;
- la figure 5 est une vue en perspective représentant uniquement les transducteurs émettant/recevant des faisceaux d'ultrason ; et
- la figure 6 est une vue en coupe transversale illustrant en particulier le décalage angulaire des faisceaux ;

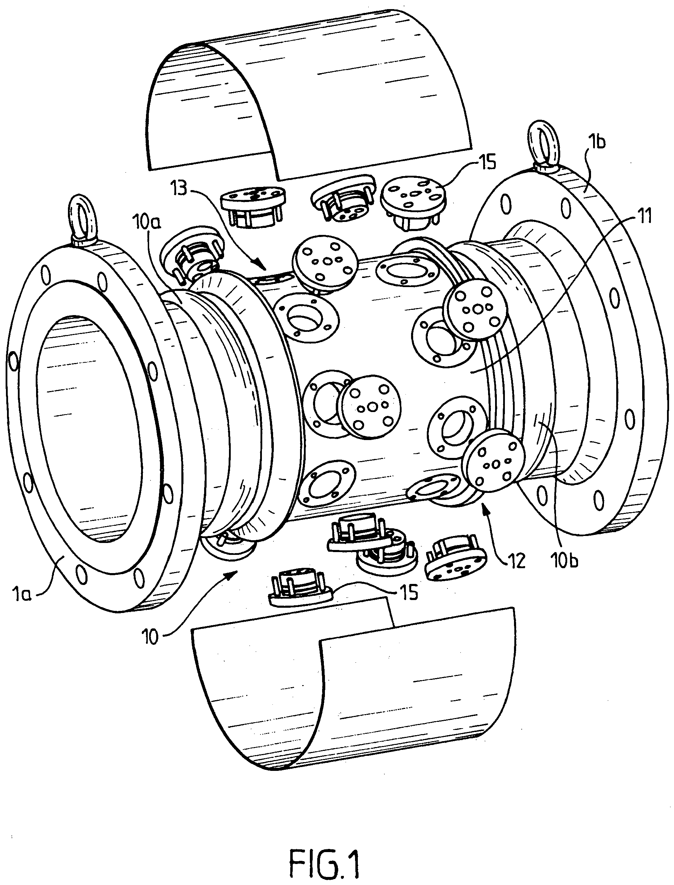

La figure 1 représente, à l'aide d'une vue en perspective éclatée, un dispositif 10 de mesure de débit de fluide destiné à être placé, au niveau de ses extrémités 10a et 10b, entre deux sections d'un pipeline de transport d'hydrocarbures (non représenté) situé par exemple entre un port pétrolier et une raffinerie et dont seules les brides de fixation 1a et 1b sont représentées.

Plus précisément, le dispositif de mesure de débit de fluide 10 permet, grâce à l'utilisation de transducteurs à faisceaux d'ultrason, de déterminer avec une très grande précision la quantité de produit fournie/achetée lors d'une transaction entre un fournisseur et un acheteur. Il s'agit donc d'un dispositif de mesure de débit transactionnel.

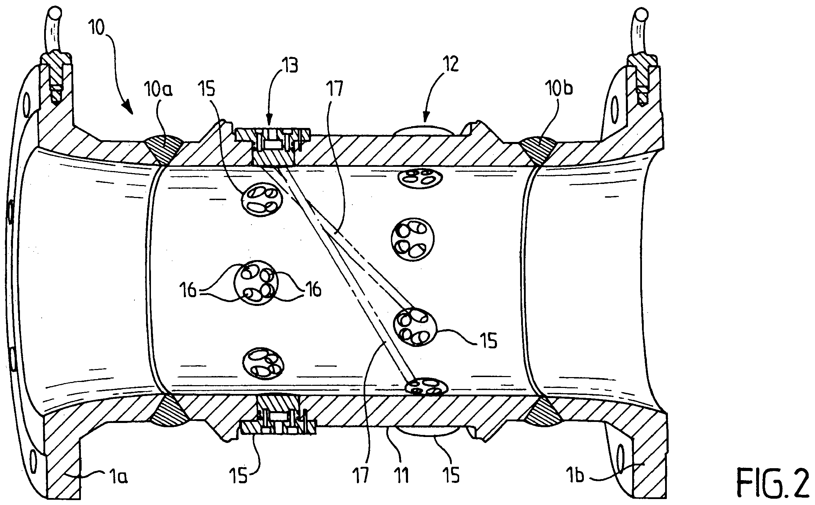

Comme cela est également visible sur la figure 2, ce dispositif 10 comporte un corps principal 11 essentiellement cylindrique réalisé par exemple en métal résistant à la corrosion tel que de l'inox. Le corps 11 comporte deux couronnes parallèles coaxiales 12 et 13 de transducteurs 15, lesquels sont reliés à un convertisseur de signaux (non représenté). Les deux couronnes 12 et 13 sont espacées axialement de 5 à 300 centimètres, de préférence de 6 à 60 centimètres.

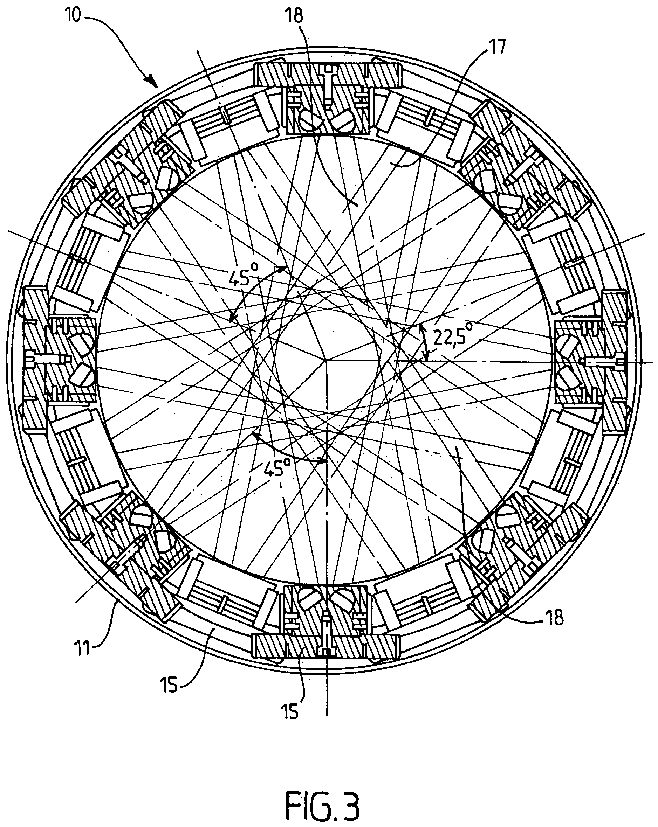

Comme cela est visible sur les figures 3 à 5, chacune des couronnes comporte n transducteurs 15 répartis de manière régulière sur sa circonférence, n étant un nombre entier supérieur ou égal à 2. Plus précisément, chaque couronne comporte huit transducteurs 15 espacés angulairement de 45° les uns des autres.

Par ailleurs, comme cela est visible sur la figure 3, les transducteurs 15 de la couronne 12 sont décalés angulairement par rapport aux transducteurs 15 de la couronne 13 d'une valeur égale à 360°/(2n), c'est-à-dire de 22,5° dans le cas présent.

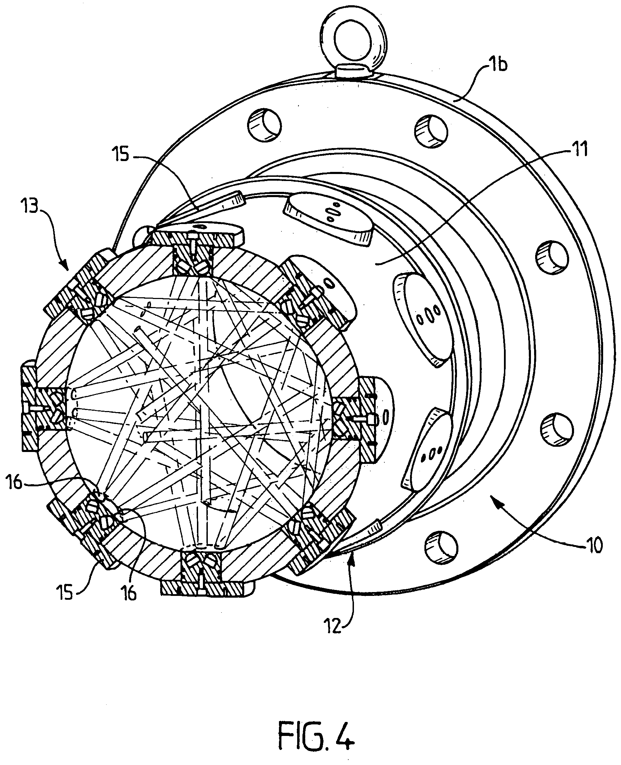

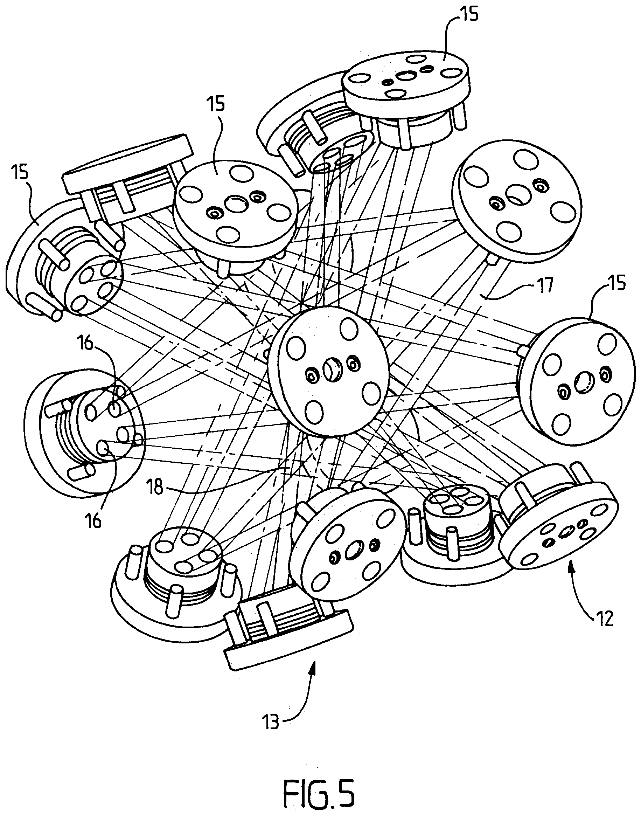

Comme cela est représenté plus en détail sur les figures 2 et 5, chaque transducteur 15 comporte 4 émetteur/récepteur 16 de faisceau à ultrason. Chaque émetteur/récepteur 16 d'un transducteur 15 de la couronne 12 est en relation, par l'intermédiaire d'un faisceau d'ultrason 17, avec un émetteur/récepteur 16 de quatre transducteurs 15 de la couronne 13 (voir figure 4 et 5). Réciproquement, chaque émetteur/récepteur 16 d'un transducteur 15 de la couronne 13 est en relation, par l'intermédiaire d'un faisceau d'ultrason 17, avec un émetteur/récepteur 16 de quatre transducteurs 15 de la couronne 12.

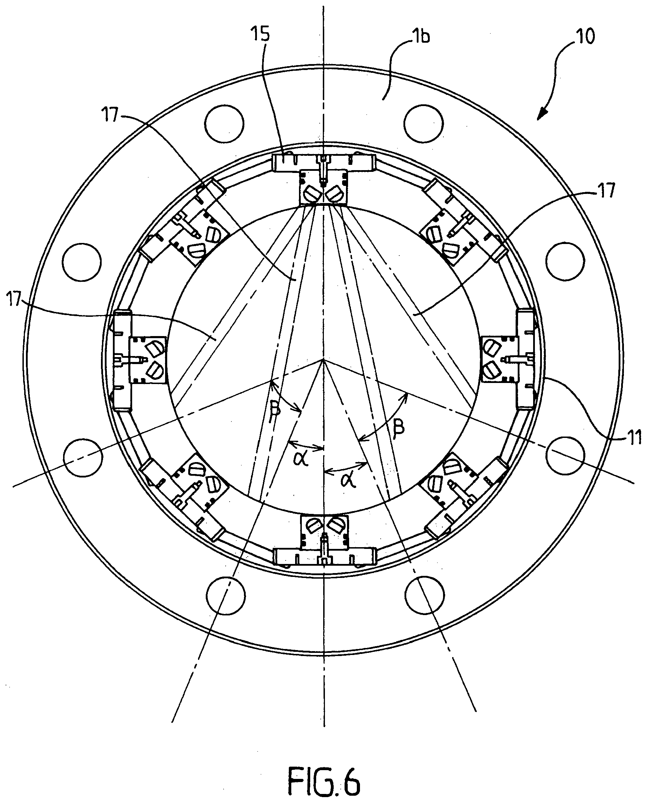

Plus précisément (figure 6), chaque transducteur 15 de la première couronne 12 est en liaison avec quatre transducteurs 15 de la seconde couronne 13 qui sont décalés angulairement par rapport audit transducteur 15 considéré de la première couronne 13 d'un angle égal à (180° ± α), α étant égal à 180°/n, c'est-à-dire 22,5°, et d'un angle égal à (180° ± β), β étant égal à 540°/n, c'est-à-dire 67,5°, et réciproquement.

Ainsi, trente deux faisceaux croisés d'ultrason 17 sont émis/reçus entre les huit transducteurs 15 de chacune des deux couronnes 12 et 13, multipliant ainsi le nombre de valeurs de débit mesurées.

Le dispositif de mesure de débit de fluide 10 conforme à la présente invention fonctionne de la manière suivante.

Lorsque le fluide traverse le pipeline, le fluide coupe les faisceaux 17 reliant les différents émetteur/récepteurs 16 des transducteurs 15. Lorsque le faisceau est coupé, un signal est émis au convertisseur. A chaque fois qu'un faisceau est coupé, le signal reçu est traité par le convertisseur afin d'en déduire une valeur de débit du fluide. La présence de trente deux faisceaux croisés permet ainsi de disposer de trente deux mesures, ce qui affine considérablement la mesure.

Par ailleurs, à chaque nœud 18 où se coupent certains faisceaux 17, une mesure par effet Doppler peut également être réalisée pour compléter la mesure linéaire.

Ainsi, grâce à la structure du dispositif de mesure de débit de fluide 10 de la présente invention, une valeur très précise de débit peut être déterminée, ce qui est particulièrement avantageux quand il s'agit de débits très élevés, surtout lors d'une transaction commerciale.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, le nombre de transducteurs 15 peut varier et être inférieur ou supérieur à huit dès lors qu'il existe un décalage angulaire entre les deux couronnes, ce dernier n'étant pas forcément égal à la moitié de l'écart angulaire prévu entre deux transducteurs consécutifs d'une même couronne.

## Revendications

1. Dispositif (10) de mesure du débit d'un fluide circulant dans une canalisation, notamment pour une transaction entre un fournisseur et un acheteur d'hydrocarbure, comportant :
- un corps cylindrique (11) destiné à être interposé entre deux sections de ladite canalisation,
- des transducteurs (15) à faisceau d'ultrason montés sur le corps principal (11) et destinés à mesurer au moins une vitesse de déplacement du flux de fluide lorsque ce dernier traverse ledit dispositif (10), et
- au moins un convertisseur destiné à transformer les signaux émis par les transducteurs en un signal de débit,
les transducteurs (15) étant montés et répartis de manière régulière sur deux couronnes parallèles coaxiales (12, 13), les transducteurs (15) d'une première couronne (12) étant décalés angulairement par rapport aux transducteurs de la seconde couronne (13) de sorte qu'aucun transducteur (15) d'une première couronne (12 ; 13) ne se trouve aligné avec un autre transducteur (15) de la seconde couronne (13 ; 12) sur une droite parallèle à l'axe commun aux deux couronnes, **caractérisé en ce que** chaque couronne (12, 13) comporte n transducteurs (15), n étant un nombre entier supérieur ou égal à 2 et le décalage angulaire entre les transducteurs (15) des deux couronnes (12, 13) est égal à 360°/(2n).

2. Dispositif selon la revendication 1, **caractérisé en ce que**, n étant égal à huit, chaque transducteur (15) d'une couronne (12 ; 13) comporte quatre émetteurs/récepteurs (16), chaque émetteur/récepteur (16) étant en relation, par l'intermédiaire d'un faisceau à ultrason (17), avec un émetteur/récepteur (16) de quatre transducteurs (15) de l'autre couronne (13 ; 12), et réciproquement.

3. Dispositif selon la revendication 2, **caractérisé en ce que** chaque transducteur (15) de la première couronne (12) est en liaison avec quatre transducteurs (15) de la seconde couronne (13) qui sont décalés angulairement de (180° ± 180°/n) et (180° ± 540°/n) par rapport audit transducteur considéré de la première couronne (12), et réciproquement.

4. Dispositif selon l'une quelconque des revendications précédentes, **caractérisé en ce que** les couronnes (12, 13) sont espacées de 5 à 300 centimètres.

5. Procédé pour mesurer le débit d'un fluide circulant dans une canalisation, notamment pour une transaction entre un fournisseur et un acheteur d'hydrocarbure, mettant en œuvre le dispositif (10) selon l'une quelconque des revendications précédentes.

6. Procédé selon la revendication 5, **caractérisé en ce que**, les faisceaux d'ultrason (17) de certains transducteurs (15) se coupant en différents nœuds (18), la mesure du débit est réalisée à la fois linéairement, lorsque chaque faisceau (17) est coupé individuellement par le fluide, et en utilisant l'effet Doppler au niveau de chacun desdits nœuds (18).

7. Canalisation de transport de fluide, en particulier d'hydrocarbure, **caractérisée en ce que** qu'elle est équipée d'un dispositif (10) selon l'une quelconque des revendications 1 à 4.

## Patentansprüche

1. Durchfluss-Messvorrichtung (10) eines Fluids, das in einer Rohrleitung fließt, insbesondere für eine Transaktion zwischen einem Lieferanten und einem Käufer von Kohlenwasserstoff, umfassend:
- einen zylindrischen Körper (11), dazu bestimmt, zwischen zwei Abschnitten der Rohrleitung eingesetzt zu werden,
- auf dem Hauptkörper (11) montierte und zum Messen mindestens einer Bewegungsgeschwindigkeit des Stroms des Fluids, wenn letzteres die Vorrichtung (10) durchquert, bestimmte Ultraschallbündel-Transducer (15), und
- mindestens einen Wandler, der dazu bestimmt ist, die durch die Transducer emittierten Signale in ein Durchfluss-Signal zu transformieren,
wobei die Transducer (15) auf regelmäßige Weise auf zwei parallelen koaxialen Ringen (12, 13) montiert und verteilt sind, die Transducer (15) des ersten Rings (12) bezüglich der Transducer des zweiten Rings (13) winkelmäßig auf eine Art versetzt sind, dass kein Transducer (15) des ersten Rings (12; 13) mit einem anderen Transducer (15) des zweiten Rings (13; 12) auf einer Geraden parallel zur gemeinsamen Achse der zwei Ringe ausgerichtet liegt, **dadurch gekennzeichnet, dass** jeder Ring (12, 13) n Transducer (15) beinhaltet, wobei n eine ganze Zahl über oder gleich 2 ist und der winkelmäßige Versatz zwischen den Transducern (15) der zwei Ringe (12, 13) gleich 360°/(2n) ist.

2. Vorrichtung nach Anspruch 1, **dadurch gekennzeichnet, dass** n gleich acht ist, jeder Transducer (15) eines Rings (12; 13) vier Sender/Empfänger (16) umfasst, jeder Sender/Empfänger (16) unter Zwischenschaltung eines Ultraschallbündels (17) mit einem Sender/Empfänger (16) der vier Transducer (15) des anderen Rings (13; 12) in Beziehung steht, und umgekehrt.

3. Vorrichtung nach Anspruch 2, **dadurch gekennzeichnet, dass** jeder Transducer (15) des ersten Rings (12) mit vier Transducern (15) des zweiten Rings (13), die bezüglich des von dem ersten Ring (12) betrachteten Transducers winkelmäßig um (180° ± 180°/n) und (180° ± 540°/n) versetzt sind, in Verbindung steht, und umgekehrt.

4. Vorrichtung nach einem der vorstehenden Ansprüche, **dadurch gekennzeichnet, dass** die Ringe (12, 13) 5 bis 300 Zentimeter beabstandet sind.

5. Verfahren zum Messen des Durchflusses eines in einer Rohrleitung fließenden Fluids, insbesondere für eine Transaktion zwischen einem Lieferanten und einem Käufer von Kohlenwasserstoff, das die Vorrichtung (10) nach einem der vorstehenden Ansprüche verwendet.

6. Verfahren nach Anspruch 5, **dadurch gekennzeichnet, dass** die Ultraschallbündel (17) von bestimmten Transducern (15) sich in unterschiedlichen Knoten (18) schneiden, wobei die Messung des Durchflusses gleichzeitig linear, wenn jedes Bündel (17) individuell durch das Fluid geschnitten wird, und unter Nutzung des Doppler-Effekts auf Höhe jedes dieser Knoten (18) ausgeführt wird.

7. Rohrleitung zum Transport von Fluid, besonders Kohlenwasserstoff, **dadurch gekennzeichnet, dass** sie mit einer Vorrichtung (10) nach einem der Ansprüche 1 bis 4 ausgestattet ist.

## Claims

1. A device (10) for measuring the flow rate of a fluid flowing in a pipe, especially for a transaction between a hydrocarbon supplier and a purchaser, comprising:
- a cylindrical body (11) intended to be interposed between two sections of said pipe,
- ultrasound-beam transducers (15) mounted on the main body (11) and intended to measure at least a speed of displacement of the fluid stream when the latter passes through said device (10), and
- at least one converter intended to transform the signals emitted by the transducers into a flow rate signal,
the transducers (15) being mounted and distributed in a regular manner around two coaxial parallel rings (12, 13), the transducers (15) of a first ring (12) being offset angularly with respect to the transducers of the second ring (13) such that no transducer (15) of a first ring (12 ; 13) is aligned with another transducer (15) of the second ring (13 ; 12) with respect to a line parallel to the common axis of the two rings
**characterized in that** each ring (12, 13) comprises n transducers (15), n being an integer greater than or equal to 2 and the angular offset between the transducers (15) of the two rings (12, 13) is equal to 360°/(2n).

2. The device as claimed in claim 1, **characterized in that**, n being equal to eight, each transducer (15) of a ring (12; 13) comprises four emitters/receivers (16), each emitter/receiver (16) being hooked up, by way of an ultrasound beam (17), with an emitter/receiver (16) of four transducers (15) of the other ring (13; 12), and vice versa.

3. The device as claimed in claim 2, **characterized in that** each transducer (15) of the first ring (12) is linked with four transducers (15) of the second ring (13) which are offset angularly by (180° ± 180°/n) and (180° ± 540°/n) with respect to said transducer considered of the first ring (12), and vice versa.

4. The device as claimed in any one of the preceding claims, **characterized in that** the rings (12, 13) are spaced 5 to 300 centimeters apart.

5. A method for measuring the flow rate of a fluid flowing in a pipe, especially for a transaction between a hydrocarbon supplier and a purchaser, implementing the device (10) as claimed in any one of the preceding claims.

6. The method as claimed in claim 5, **characterized in that**, the ultrasound beams (17) of certain transducers (15) cutting one another at various nodes (18), the measurement of the flow rate is carried out both linearly, when each beam (17) is cut individually by the fluid, and by using the Doppler effect at the level of each of said nodes (18).

7. A fluid transport pipe, in particular for hydrocarbon fluid, **characterized in that** it is equipped with a device (10) as claimed in any one of claims 1 to 4.
